# EUROPEAN PATENT APPLICATION

(11) **EP 4 711 515 A1**
(43) Date of publication of application: **18.03.2026**
(21) Application number: 24819543.0
(22) Date of filing: 31.05.2024
(51) Int. Cl.: D06F 39/02, G01F 23/04, D06F 34/28, D06F 103/44, D06F 105/58

(54) **DEVICE FOR SENSING REMAINING AMOUNT OF DETERGENT IN WASHING MACHINE**

(30) Priority: 07.06.2023 KR 20230072905
(71) Applicant: DSW Inc., Yongin-si, Gyeonggi-do 16953 (KR)
(72) Inventor: KIM, Yun Chan, Yongin-si Gyeonggi-do 16953 (KR)
(74) Representative: Prüfer & Partner mbB Patentanwälte · Rechtsanwälte
(86) International application number: PCT/KR2024/007506
(87) International publication number: WO 2024/253391

(57) **Abstract**

The present invention relates to a device for detecting the remaining amount of detergent in a washing machine, which senses the remaining amount of detergent filled in a detergent tank and provides information on the number of washing cycles available afterwards. The present embodiment relates to a device for detecting the remaining amount of detergent in a washing machine, comprising: a pair of electrode rods provided in a detergent tank in such a way as to be submerged in the detergent; and a control unit which supplies a current to the pair of electrode rods, extracts the remaining amount of detergent by using a change in electrical characteristics measured between the pair of electrode rods according to the level of the detergent, and provides information of the remaining amount of detergent to a display unit, wherein at least one of the pair of electrode rods is a resistance electrode rod consisting of an inner core and an electrical resistor coated onto the peripheral surface of the inner core, and the electrical resistor is made by mixing an insulating material and a conductive material and has a given resistance.

## Description

### Technical Field

The present invention relates to a device for detecting the remaining amount of detergent in a washing machine, more particularly to a device for detecting the remaining amount of detergent in a washing machine that is capable of detecting the remaining amount of detergent in a detergent tank of the washing machine and providing information of the number of washing cycles available afterwards.

### Background Art

Generally, washing machines are devices that typically use the emulsifying action of detergent, the friction among water currents generated from the rotations of a washing machine tub, and agitation applied from the washing machine tub to the laundry to remove various types of pollutants from laundry. The washing machines are largely classified into pulsator washing machines that perform washing by means of water currents generated by the rotations of a plate-shaped pulsator and drum washing machines that perform washing by means of drop differences and friction between washing water supplied to the inside of a drum and laundry according to the rotations of the drum.

Recently, fully automatic washing machines, which automatically perform the entire process of washing, rinsing, and spinning, have been introduced so that a user's control during the entire process is not needed at all. To do this, the washing machine is provided with a detergent supply device that automatically supplies a proper amount of detergent according to an amount of laundry, and if wash water is supplied to a washing machine tub, the detergent supply device operates to supply the detergent into the tub in a mixed state with the wash water.

Laundry detergents are commonly available in solid-phase powder and liquid forms, and detergent supply configurations of washing machines may be varied according to the types of detergent used.

The washing machine using liquid detergent is freer in installation position of the detergent supply device than the washing machine using powder detergent. In detail, the powder detergent is not easy to move upward so that the installation position of the detergent supply device of the washing machine using the powder detergent is limitedly determined on top of the tub, but it is possible to move the liquid detergent upward by means of a device such as a pump for forcibly flowing a fluid so that the detergent supply device of the washing machine using the liquid detergent may be located on the underside of the tub. Therefore, the washing machine using liquid detergent is freer in arrangements of parts than the washing machine using powder detergent.

Further, an amount of powder detergent supplied is not easy to be adjusted so that in the case of the washing machine using powder detergent, a proper amount of detergent according to an amount of laundry has to be supplied directly by a user whenever washing. In the case of the washing machine using liquid detergent, contrarily, an amount of detergent to be supplied can be easily adjusted if a flow regulator is used so that after a large amount of detergent has been stored once in the washing machine using liquid detergent, a given amount of detergent is automatically supplied into the tub whenever washing.

Further, the washing machine using liquid detergent has the above-mentioned excellent advantages when compared with the washing machine using powder detergent, but there are many inconveniences in frequently checking the remaining amount of detergent in the washing machine. If the remaining amount of detergent in the washing machine is not sufficient to wash laundry, the laundry washing is not smoothly done.

To solve such conventional problems, a device and method for detecting the remaining amount of liquid detergent in a washing machine is disclosed in Korean Patent Application Laid-open No. 10-2011-0004748 (which is referred to as Patent document 1). The device of the Patent document 1 has a pair of electrode rods disposed in a liquid detergent tank in such a way as to allow end portions thereof to be located at different heights from the bottom of the liquid detergent tank, and if liquid detergent is not detected from both of the electrode rods, a control unit determines that the remaining amount of liquid detergent in the washing machine is not sufficient for washing. In detail, the device of the Patent document 1 only detects a state in which the liquid detergent is low to a given level or under, that is, the existence/non-existence of liquid detergent, so that it fails to detect the exact remaining amount of liquid detergent, that is, the current level of liquid detergent remaining in the liquid detergent tank. As a result, a user cannot recognize whether how many washing cycles are available by using the leftover liquid detergent after the current washing cycle.

### Disclosure

### Technical Problem

Accordingly, the present invention has been made in view of the above-mentioned problems occurring in the related art, and it is an object of the present invention to provide a device for detecting the remaining amount of detergent in a washing machine that is capable of detecting the remaining amount of liquid detergent in a detergent tank of the washing machine in real time.

It is another object of the present invention to provide a device for detecting the remaining amount of detergent in a washing machine that is capable of providing information of the number of washing cycles available afterwards for a user, based on the information of the remaining amount of liquid detergent detected thereby.

The technical problems to be achieved through the present invention are not limited as mentioned above, and other technical problems not mentioned herein will be obviously understood by one of ordinary skill in the art through the following description.

### Technical Solution

To accomplish the above-mentioned objects, according to the present invention, there is provided a device for detecting the remaining amount of detergent in a washing machine, the device including: a pair of electrode rods disposed in a detergent tank in such a way as to be submerged in the detergent; and a control unit for supplying an electric current to the pair of electrode rods, extracting the remaining amount of detergent in the detergent tank from a change in electrical characteristics measured between the pair of electrode rods according to the level of the detergent, and providing information of the remaining amount of detergent extracted to a display unit, wherein at least one of the pair of electrode rods is a resistance electrode rod consisting of an inner core and an electrical resistor coated onto the peripheral surface of the inner core, and the electrical resistor is made by mixing an insulating material and a conductive material and has a given resistance.

Further, the control unit may extract information of the number of washing cycles available afterwards according to the extracted information of the remaining amount of detergent and provide the extracted information of the number of washing cycles available afterwards to the display unit.

Furthermore, the resistance electrode rod may be made of a material having an electrical resistance between 10 Ω and 100 MΩ.

Moreover, the electrode rods may have end portions located at the same height as each other in such a way as to be spaced apart from the bottom of the detergent tank by a given distance.

Besides, the electrode rods may have end portions located at different heights in such a way as to be spaced apart from the bottom of the detergent tank distant by given distances.

### Advantageous Effects of Invention

The device for detecting the remaining amount of detergent in a washing machine according to the present invention detects the current remaining amount of detergent in the detergent tank and thus provides the information of the remaining amount of detergent for the user in real time.

Additionally, the device for detecting the remaining amount of detergent in a washing machine according to the present invention provides the information of the number of washing cycles available afterwards, based on the information of the current remaining amount of detergent, thereby greatly improving the conveniences of use.

### Brief Description of Drawings

FIG. 1 shows the main parts of a device for detecting the remaining amount of detergent in a washing machine according to an embodiment of the present invention.
FIG. 2 shows a resistance electrode rod of FIG. 1.
FIG. 3 shows examples wherein the remaining amounts of detergent are detected according to the embodiment of the present invention.
FIG. 4 shows a variation of the device for detecting the remaining amount of detergent in a washing machine according to the embodiment of the present invention.

### Mode for Invention

The present invention and the technical solutions accomplished by carrying out the present invention will become apparent from embodiments of the present invention as will be discussed later. Hereinafter, an explanation of the embodiments of the present invention will be given in detail with reference to the attached drawings.

Further, it should be understood that differences in the embodiments of the present invention are not mutually exclusive. In detail, the particular features, structures, or characteristics in one or more embodiments may be combined in any suitable manner, within the idea and technical scope of the present invention, and positions or arrangements of the components described in the respective embodiments may be changed. In the description, it should be noted that the parts corresponding to those of the drawings are indicated by corresponding reference numerals, and lengths, dimensions, thicknesses, and shapes may be exaggerated for clarity of illustration. Also, in explaining elements, terms like "first", "second", etc. may be used to distinguish one from the others only, so that their technical meaning may not be limited by their lexical meaning.

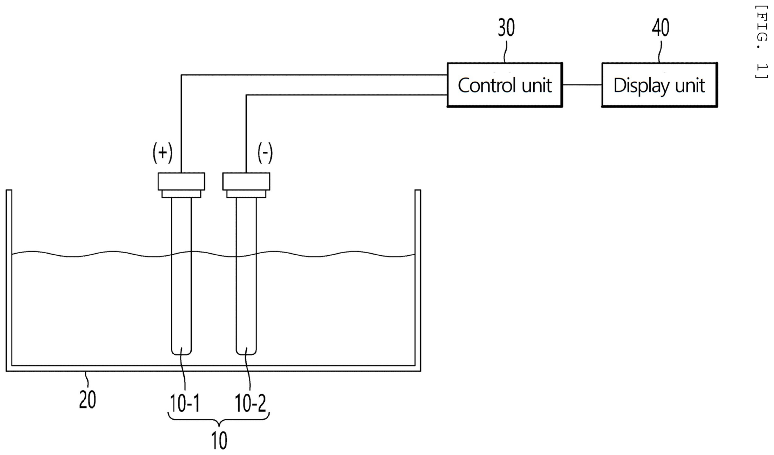

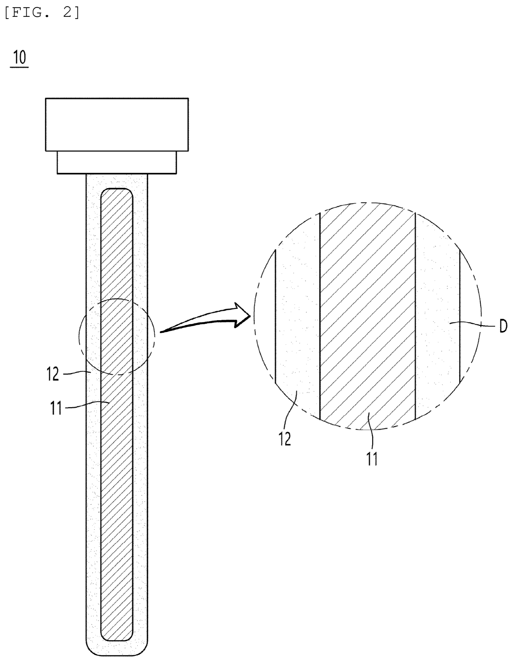

FIG. 1 shows the main parts of a device for detecting the remaining amount of detergent in a washing machine according to an embodiment of the present invention, and FIG. 2 shows a resistance electrode rod of FIG. 1..

Referring first to FIG. 1, a device for detecting the remaining amount of detergent in a washing machine according to an embodiment of the present invention includes a pair of resistance electrode rods 10 disposed in a detergent tank 20, a control unit 30 connected to the pair of resistance electrode rods 10 to detect the remaining amount of detergent in the detergent tank 20 and thus extract the information of the number of washing cycles available afterwards, and a display unit 40 for displaying the remaining amount of detergent and the information of the number of washing cycles available afterwards that are detected and extracted by the control unit 30.

The resistance electrode rods 10 are submerged in the detergent stored in the detergent tank 20 and thus serve to detect the remaining amount of detergent in the detergent tank 20. The resistance electrode rods 10 are electrode rods having resistant electrodes on the surfaces thereof, while having a given diameter and length. The resistance electrode rods 10 include a first resistance electrode rod 10-1 that is located at one side of the detergent tank 20 and serves as a positive (+) terminal and a second resistance electrode rod 10-2 that is located at the other side of the detergent tank 20 and serves as a negative (-) terminal.

The resistance electrode rods 10 are spaced apart from each other by a given distance and allow the end portions thereof to be located at a given height spaced apart from the bottom of the detergent tank 20 by a given distance, that is, at a given height at which the liquid detergent is used to an amount less than the reference amount thereof so that the detergent tank 20 has to be refilled with detergent.

The detergent tank 20, which is configured to be filled with the laundry detergent, has a given size and is mounted on the washing machine, which is well known in the conventional practices.

The control unit 30 supplies power to the pair of resistance electrode rods 10 and thus extracts the remaining amount of detergent in the detergent tank 20 from the information of an electric current or resistance (which means electrical characteristics) detected by the pair of resistance electrode rods 10. To do this, the control unit 30 includes a power supply module and a remaining amount extraction module.

If the electric current is supplied to the liquid detergent through the pair of resistance electrode rods 10, it flows along the surface of one side first resistance electrode rod 10-1, the surface of the liquid detergent filled in the detergent tank 20, and the surface of the other side second resistance electrode rod 10-2. The control unit 30 extracts the remaining amount of liquid detergent according to the electrical characteristics measured between the first resistance electrode rod 10-1 and the second resistance electrode rod 10-2.

Further, the control unit 30 extracts the number of washing cycles available afterwards according to the information of the remaining amount of liquid detergent. To do this, the control unit 30 further includes a washing information prediction module. After one time washing cycle is performed in a state where the liquid detergent is completely filled in the detergent tank 20, that is, at a maximum level of liquid detergent, the control unit 30 compares an amount of detergent consumed with the remaining amount of detergent and then extracts the number of washing cycles available afterwards according to the information obtained through the comparison. The amounts of liquid detergent needed are varied according to amounts of laundry, but through programmed repetition learning, the number of washing cycles available afterwards with respect to a given amount of laundry can be extracted.

The control unit 30 is provided as a Programmable Logic Controller (PLC) that is programmed to control certain processes, and the remaining amount information and the information of the number of washing cycles available afterwards, which are extracted through the control unit 30, are provided to the display unit 40.

The display unit 40 displays the remaining amount information and the information of the number of washing cycles available afterwards that are received from the control unit 30 and allows them to be checked by the user. To do this, the display unit 40 includes a display module, which can be used as a display module that is mounted on conventional washing machines.

Referring to FIG. 2, each resistance electrode rod 10 of the present invention consists of an inner core 11 and an electrical resistor 12 coated onto the peripheral surface of the inner core 11.

The inner core 11 serves to keep the entire shape of the resistance electrode rod 10. The inner core 11 is made of a metal, and desirably, the metal should have no effect on the electrical characteristics of the electrical resistor 12. Otherwise, the inner core 11 may be made of an insulating plastic material. In this case, the plastic material desirably should have excellent thermal resistance so that it can be resistant to high heat in a process of coating the electrical resistor 12 thereonto.

The electrical resistor 12 is made of a material that is obtained by mixing an insulating material and a conductive material at given ratios and has a given resistance and thus coated onto the peripheral surface of the inner core 11. If the electrical resistor 12 is made of a conductive material that allows an electric current to flow easily through it or an insulating material that does not allow an electric current to flow through it, electrical characteristics between the resistance electrode rods 10 are not changed even in the case where the level of liquid detergent is varied, thereby failing to detect the remaining amount of detergent in the detergent tank 20.

According to the embodiment of the present invention, the resistance electrode rods 10 have an electrical resistance between 10 Ω and 100 MΩ (100,000,000 Ω). If the resistance electrode rods 10 have the electrical resistance less than 10 Ω or greater than 100 MΩ, changes in the electrical characteristics that are generated according to the changes in the level of detergent may be slight, which lowers the degree of accuracy in the detection of the remaining amount of detergent. Under the condition where the resistance electrode rods 10 have an electrical resistance between 10 Ω and 100 MΩ, therefore, changes in the electrical characteristics that are generated according to the changes in the level of liquid detergent are easily measured, thereby improving the degree of accuracy in the detection of the remaining amount of detergent.

According to the embodiment of the present invention, further, both of the electrode rods 10 are the resistance electrode rods, but of course, it is possible that at least any one of both electrode rods 10 may be the resistance electrode rod. In detail, one side electrode rod may be the resistance electrode rod, and the other side electrode rod may be a conductive electrode rod.

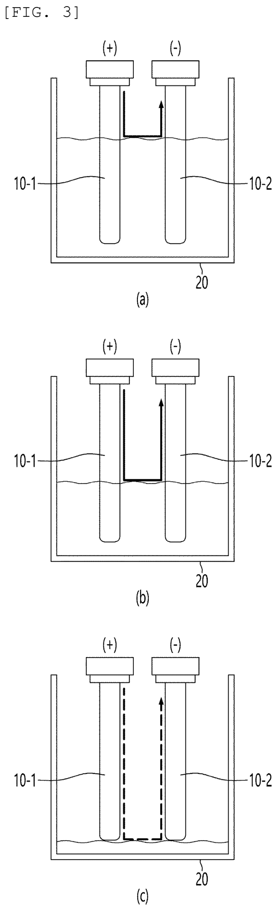

FIG. 3 shows examples wherein the remaining amounts of detergent are detected according to the embodiment of the present invention.

Referring to FIG. 3, processes of detecting the remaining amount of detergent will be described. As shown in FIG. 3a, first, the pair of resistance electrode rods 10 is exposed by a relatively short length to the outside in a state where a level of liquid detergent is relatively high, and in this case, the electric current flows along a relatively short route formed over the surface of the first resistance electrode rod 10-1, the surface of the liquid detergent, and the surface of the second resistance electrode rod 10-2. In this case, since the exposed region of the pair of resistance electrode rods 10 has a relatively low resistance, the control unit 30 measures a relatively high electric current between the first resistance electrode rod 10-1 and the second resistance electrode rod 10-2.

As shown in FIG. 3b, next, the pair of resistance electrode rods 10 is exposed by a relatively long length to the outside in a state where a level of liquid detergent is relatively low, and in this case, the electric current flows along a relatively long route formed over the surface of the first resistance electrode rod 10-1, the surface of the liquid detergent, and the surface of the second resistance electrode rod 10-2. In this case, since the exposed region of the pair of resistance electrode rods 10 has a relatively high resistance, the control unit 30 measures a relatively low electric current between the first resistance electrode rod 10-1 and the second resistance electrode rod 10-2.

The level of liquid detergent, that is, the remaining amount of liquid detergent in the detergent tank 20 is extracted according to the electrical characteristics measured based on the exposed length to the outside of the pair of resistance electrode rods 10.

As shown in FIG. 3c, further, the pair of resistance electrode rods 10 and the liquid detergent are physically separated from each other in a state where a level of liquid detergent is lower than the end portions of the resistance electrode rods 10, and in this case, the electric current does not flow. In this case, the control unit 30 produces information of liquid detergent refill and provides the information to the display unit 40.

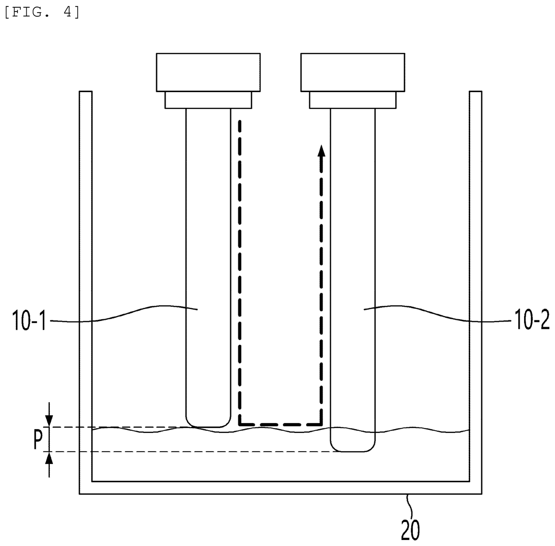

FIG. 4 shows a variation of the device for detecting the remaining amount of detergent in a washing machine according to the embodiment of the present invention.

In the case of the variation of the device of the present invention, the resistance electrode rods 10 have end portions located at different heights from the bottom of a detergent tank 20. For example, the end portion of the first resistance electrode rod 10-1 is located at a height distant by a given distance P from the end portion of the second resistance electrode rod 10-2.

Generally, the liquid detergent is viscous so that even if a level of liquid detergent is lower than the end portions of the resistance electrode rods 10, the liquid detergent is connected to the resistance electrode rods 10 to allow an error in which the detergent refill information is not produced to be present. To prevent such an error from being present, the end portion of one side resistance electrode rod 10 is located at a relatively higher position than that of the other side resistance electrode rod 10.

The present invention provides the device for detecting the remaining amount of detergent in a washing machine, but of course, the present invention may be utilized even in a technology in which amounts of material used in other products are detected based on electrical characteristics. Further, the present invention detects the remaining amount of liquid detergent in a washing machine, but of course, the present invention detects the remaining amount of powder detergent, gel detergent, and ice-like solid detergent only if they are conductive. Furthermore, the present invention detects the remaining amount of liquid detergent, but of course, the present invention detects the remaining or used amounts of other conductive materials capable of utilizing their electrical characteristics.

Although specific embodiments have been illustrated and described herein, it will be appreciated by those of ordinary skill in the art that various variations and other embodiments may be substituted for the specific embodiment shown. This application is intended to cover any variations and other embodiments of the present invention. Therefore, it is manifestly intended that this invention be limited only by the claims and the equivalents thereof.

## Claims

1. A device for detecting the remaining amount of detergent in a washing machine, the device comprising:
a pair of electrode rods disposed in a detergent tank in such a way as to be submerged in the detergent; and
a control unit for supplying an electric current to the pair of electrode rods, extracting the remaining amount of detergent in the detergent tank from a change in electrical characteristics measured between the pair of electrode rods according to the level of the detergent, and providing information of the remaining amount of detergent extracted to a display unit,
wherein at least one of the pair of electrode rods is a resistance electrode rod consisting of an inner core and an electrical resistor coated onto the peripheral surface of the inner core, and the electrical resistor is made by mixing an insulating material and a conductive material and has a given resistance.

2. The device according to claim 1, wherein the control unit extracts information of the number of washing cycles available afterwards according to the extracted information of the remaining amount of detergent and provides the extracted information of the number of washing cycles available afterwards to the display unit.

3. The device according to claim 1, wherein the resistance electrode rod is made of a material having an electrical resistance between 10 Ω and 100 MΩ.

4. The device according to claim 1, wherein the electrode rods have end portions located at the same height as each other in such a way as to be spaced apart from the bottom of the detergent tank by a given distance.

5. The device according to claim 1, wherein the electrode rods have end portions located at different heights in such a way as to be spaced apart from the bottom of the detergent tank distant by given distances.
